# EUROPEAN PATENT SPECIFICATION

(11) **EP 2 949 695 B1**
(45) Date of publication and mention of the grant of the patent: **12.04.2017**
(21) Application number: 15167481.9
(22) Date of filing: 13.05.2015
(51) Int. Cl.: C08L 9/00, B60C 1/00, C08K 3/04, C08K 3/36, C08K 5/098, C08K 5/548, C08L 9/06, C08K 5/08, C08K 5/18, C08K 5/3437, C08K 5/09

(54) **RUBBER COMPOSITION AND TIRE**
KAUTSCHUKZUSAMMENSETZUNG UND REIFEN
COMPOSITION DE CAOUTCHOUC ET PNEU

(30) Priority: 13.05.2014 JP 2014099581; 16.02.2015 JP 2015027578
(43) Date of publication of application: 02.12.2015
(73) Proprietor: SUMITOMO RUBBER INDUSTRIES, LTD., Kobe-shi, Hyogo-ken, 651-0072 (JP)
(72) Inventor: Miyazaki, Tatsuya, Kobe-shi, Hyogo 651-0072 (JP); Nagae, Akinori, Kobe-shi, Hyogo 651-0072 (JP)
(74) Representative: Manitz, Finsterwald & Partner GbR

(56) References cited:
- EP-A1- 2 703 186
- EP-A1- 2 716 700
- EP-A1- 2 784 115
- EP-A1- 2 799 480
- EP-A2- 2 738 014
- WO-A1-2013/021694
- WO-A1-2013/080664
- WO-A1-2014/020740
- US-A1- 2012 016 056
- US-A1- 2013 331 498

## Description

### TECHNICAL FIELD

The present invention relates to a rubber composition and a tire which has a tread composed of the rubber composition.

### BACKGROUND OF THE INVENTION

As a method of improving wet grip performance and rolling resistance of a rubber composition, the increase of the amount of silica, an adhesion imparting resin, an anti-aging agent and the like has been performed. Also, as a method of improving abrasion resistance, a high molecular weight polymer and/or a particulate filler has been compounded, but crack resistance tends to be deteriorated. Therefore, for preventing deterioration of crack resistance, the amount of the anti-aging agent needs to be increased.

However, there is a problem that these agents are bloomed on the surface of a raw cover and form a tacky coating and this coating and/or other rubber pieces (cut spew, ripped rubber coating and the like) is attached and deposited on a mold, thereby the mold becomes easy to be contaminated, the frequency of cleaning of the mold has to be increased and productivity is extremely degraded. In addition, if the contaminated mold continues to be used, the color and/or gloss of the surface of the rubber composition (such as tire) becomes non-uniform and if the mold further continues to be used, one can recognize concavity and convexity on the surface with sensation.

In particular, there has been a problem that a mold is easily contaminated due to silica-rich formulation but recently, due to the increased amount of an adhesion imparting resin, the mold is further easily contaminated. Additionally, though it is known that a silane coupling agent is compounded for improving dispersibility of silica, the silane coupling agent is known to, if the number of kneading is small and/or kneading time is short, or a deaeration process (process of promoting a coupling reaction by evacuating ethanol or water piled up in a container during kneading with a Banbury mixer for a few seconds) is not performed, remain in the kneaded product as a unreacted monomer even after the kneading is finished. If the remaining rate of this unreacted silane coupling agent is high, there are a problem that raw rubber adheres on a process roll excessively which results in an extremely dangerous operation and deterioration of production efficiency, and a problem that the raw cover adheres on the mold excessively and thereby the mold becomes easily contaminated.

In JP 5153961 B, there is disclosed a rubber composition comprising specific silica and at least one selected from the group consisting of stearic acid, a metal salt of saturated fatty acid and a specific mold release agent. However, the rubber composition is aimed to prevent a tread groove crack in a shoulder main groove and a technique of decreasing the unreacted rate of a silane coupling agent and preventing mold contamination is not disclosed.

Japanese WO 2013/080664 A1 discloses a production method for forming a tread of a pneumatic tire, wherein the rubber composition of the tread may include high-cis butadiene rubber, modified styrene butadiene rubber, carbon black, silica, silane coupling agent, a resin C10, an anti-aging agent, stearic acid and zinc oxide. Similar rubber compositions are disclosed in WO 2013/021694 A1, WO 2014/020740 A1, US 2013/331498, US 2012/016056, EP 2 703 186 A1 and EP 2 716 700 A1.

EP 2 738 014 A2, EP 2 799 480 A1 and EP 2 784 115 A1, which are prior art documents under Article 54(3) EPC, disclose rubber composition, which may include a mercaptosilane coupling agent.

### SUMMARY OF THE INVENTION

An object of the present invention is to provide a rubber composition which can prevent mold contamination while maintaining abrasion resistance and wet grip performance, and a tire which has a tread composed of the rubber composition.

The present invention relates to a rubber composition comprising 2.5 to 8.0 parts by mass of at least one selected from the group consisting of: stearic acid, a metal salt of saturated fatty acid and a mold release agent comprising at least one selected from the group consisting of a metal salt of fatty acid, a fatty acid amide and an amide ester provided that the rubber composition includes 0.1 to 4.0 parts by mass of the mold release agent; 1 to 50 parts by mass of a resin which has a softening point of 82 to 160°C; and 30 to 140 parts by mass of silica which has a BET specific surface area of 80 to 270 m²/g, based on 100 parts by mass of a diene rubber component, the rubber composition further comprising 3 to 10 parts by mass of a silane coupling agent based on 100 parts by mass of the silica, wherein the amount of an unreacted silane coupling agent in the rubber composition before vulcanization is 0 to 1.0 part by mass based on 100 parts by mass of the diene rubber component, wherein the rubber composition further comprises not more than 2.5 parts by mass of zinc oxide based on 100 parts by mass of the diene rubber component and wherein the rubber composition further comprises 15 to 50 parts by mass of oil based on 100 parts by mass of the diene rubber component.

It is preferable that the amount of the unreacted silane coupling agent in the rubber composition before vulcanization is 0 to 0.2 part by mass based on 100 parts by mass of the diene rubber component.

It is preferable that the rubber composition further comprises 0.1 to 2.4 parts by mass of a quinoline anti-aging agent based on 100 parts by mass of the diene rubber component.

It is preferable that the silane coupling agent is a mercapto silane coupling agent.

The present invention further relates to a tire which has a tread composed of the rubber composition.

According to the present invention, a rubber composition which can prevent mold contamination while maintaining abrasion resistance and wet grip performance can be provided, by using a rubber composition comprising a predetermined amount of at least one selected from the group consisting of stearic acid, a metal salt of saturated fatty acid and a specific mold release agent, a specific resin, silica and a silane coupling agent, based on a diene rubber component, where an amount of an unreacted silane coupling agent in the rubber composition before vulcanization is within a predetermined range. According to the present invention, a tire which has a tread composed of the rubber composition can be further provided.

### DETAILED DESCRIPTION

The rubber composition of the present invention comprises a predetermined amount of at least one selected from the group consisting of stearic acid, a metal salt of saturated fatty acid and a specific mold release agent, a specific resin, silica and a silane coupling agent, based on a diene rubber component, and is characterized in that an amount of an unreacted silane coupling agent in the rubber composition before vulcanization is within a predetermined range.

Examples of the diene rubber component include a natural rubber (NR), an isoprene rubber (IR), a butadiene rubber (BR), a styrene-butadiene rubber (SBR), a styrene-isoprene rubber (SIR), a styrene-isoprene-butadiene rubber (SIBR), an ethylene-propylene-diene rubber (EPDM), a chloroprene rubber (CR), an acrylonitrile-butadiene rubber (NBR) and a butyl rubber (IIR). These diene rubbers may be used alone, or may be used in combination with two or more thereof. Among them, it is preferable to use the NR, BR and SBR since grip performance and abrasion resistance can be obtained in a favorable balance, and it is more preferable to use the SBR since more excellent grip performance can be obtained.

The SBR is not limited especially and for example, an emulsion polymerized styrene-butadiene rubber (E-SBR) and a solution polymerized styrene-butadiene rubber (S-SBR) and the like can be used. In addition, a terminal-modified S-SBR (modified S-SBR) or E-SBR (modified E-SBR) can be also used and examples of the modified S-SBR and the modified E-SBR include one modified with an organic silicon compound comprising an amino group, an epoxy group, an alkoxy group and the like.

The content of styrene in the SBR is preferably not less than 20% by mass, more preferably not less than 25% by mass. If the content of styrene in the SBR is less than 20% by mass, there is a tendency that sufficient grip performance cannot be obtained. On the other hand, the content of styrene in the SBR is preferably not more than 60% by mass, more preferably not more than 50% by mass. If the content of styrene in the SBR is more than 60% by mass, there is a tendency that abrasion resistance is degraded, and additionally, the temperature dependence of the rubber hardness (specifically, a difference between the hardness at 23°C and the hardness at 100°C) is increased and thus a performance change with respect to a temperature change is increased.

In the case where the rubber composition comprises the SBR as a diene rubber component, the content of the SBR is preferably not less than 20% by mass, more preferably not less than 30% by mass. If the content of the SBR is less than 20% by mass, there is a tendency that sufficient heat resistance and grip performance cannot be obtained. On the other hand, the content of the SBR is preferably not more than 90% by mass, more preferably not more than 80% by mass. If the content of the SBR is more than 90% by mass, heat build-up property and crack growth resistance tend to be deteriorated.

The examples of the BR include a high cis-1,4-polybutadiene rubber (high-cis BR) and particularly a rare-earth-metal-catalyzed high-cis BR, a butadiene rubber comprising 1,2-syndiotactic polybutadiene crystals (SPB-containing BR), a modified butadiene rubber (modified BR) and the like, and these may be used alone, or may be used in combination with two or more thereof.

The high-cis BR is a butadiene rubber in which the content of cis-1,4 bond is not less than 90% by mass and particularly, a rare-earth-metal-catalyzed high-cis BR is preferable.

The rare-earth-metal-catalyzed high-cis BR is a high cis-1,4-polybutadiene rubber synthesized with a rare earth element containing catalyst, and is characterized by a high cis content and a low vinyl content. Ones generally used in the production of tires may be used as the rare-earth-metal-catalyzed high-cis BR.

Well-known ones may be used as the rare earth element containing catalyst used for the synthesis of the rare-earth-metal-catalyzed high-cis BR, and examples thereof include catalysts which comprise a lanthanoids-containing compound, an organoaluminum compound, an aluminoxane, or a halogen-containing compound, and optionally comprise a Lewis base. Among them, Nd-containing catalysts using a neodymium (Nd)-containing compound as a lanthanoids-containing compound are particularly preferable.

Examples of the lanthanoids-containing compound include halides, carboxylates, alcoholates, thioalcoholates and amides of rare earth metals which have atomic numbers 57 through 71. Among them, the Nd-containing catalysts are preferable since a BR having a high cis content and a low vinyl content can be obtained.

As the organoaluminum compound, compounds represented by AlR^{a}R^{b}R^{c} (wherein R^{a}, R^{b} and R^{c} are the same or different, and each represents hydrogen or a hydrocarbon group having 1 to 8 carbon atoms) may be used. Examples of the aluminoxane include chain aluminoxanes and cyclic aluminoxanes. Examples of the halogen-containing compound include aluminum halides represented by AlXₖR^{d}3₋ₖ (wherein X represents halogen, R^{d} represents an alkyl, aryl, or aralkyl group having 1 to 20 carbon atoms, and k represents 1, 1.5, 2 or 3), strontium halides such as Me₃SrCl, Me₂SrCl₂, MeSrHCl₂ and MeSrCl₃, and metal halides such as silicon tetrachloride, tin tetrachloride and titanium tetrachloride. The Lewis base may be used for complexing a lanthanoids-containing compound, and suitable examples thereof include acetylacetone, ketone, alcohol and the like.

In the polymerization of butadiene, the rare earth element containing catalysts may be used while being dissolved in an organic solvent (such as n-hexane, cyclohexane, n-heptane, toluene, xylene, or benzene), or while being carried on an appropriate carrier such as silica, magnesia, or magnesium chloride. The polymerization condition may be either of solution polymerization or bulk polymerization. The polymerization temperature is preferably -30 to 150°C and the polymerization pressure may be optionally set depending on other conditions.

The rare-earth-metal-catalyzed high-cis BR has a Mooney viscosity ML₁₊₄ (100°C) of preferably not less than 35, more preferably not less than 40. A Mooney viscosity of less than 35 tends to cause a low viscosity of the unvulcanized rubber composition and a proper thickness after vulcanization tends not to be ensured. Further, the Mooney viscosity is preferably not more than 55, more preferably not more than 50. When the Mooney viscosity exceeds 55, the unvulcanized rubber composition tends to become so hard that it is difficult to be extruded with smooth edges. It is noted that the Mooney viscosity is measured in accordance with ISO289 or JIS K6300.

The ratio of the weight-average molecular weight (Mw) to the number-average molecular weight (Mn) (Mw/Mn) of the rare-earth-metal-catalyzed high-cis BR is preferably not less than 1.2, more preferably not less than 1.5. When the Mw/Mn is less than 1.2, processability tends to be significantly deteriorated. Further, the Mw/Mn is preferably not more than 5, more preferably not more than 4. When the Mw/Mn exceeds 5, heat build-up property tends to deteriorate.

The Mw of the rare-earth-metal-catalyzed high-cis BR is preferably not less than 300,000, more preferably not less than 320,000. On the other hand, the Mw is preferably not more than 1,500,000, more preferably not more than 1,300,000. Moreover, the Mn of the rare-earth-metal-catalyzed high-cis BR is preferably not less than 100,000, more preferably not less than 150,000. On the other hand, the Mn is preferably not more than 1,000,000, more preferably not more than 800,000. If the Mw or Mn is less than its preferable lower limit, heat build-up property and elongation at break tend to deteriorate. On the other hand, if the Mw or Mn is more than its preferable upper limit, deterioration of processability becomes a concern. In the present invention, the Mw and Mn can be calculated with polystyrene standards using a gel permeation chromatograph (GPC).

The content of cis-1,4 bond of the rare-earth-metal-catalyzed high-cis BR is not less than 90% by mass, preferably not less than 93% by mass, more preferably not less than 95% by mass. If the content is less than 90% by mass, elongation at break and abrasion resistance tend to deteriorate.

The vinyl content of the rare-earth-metal-catalyzed high-cis BR is preferably not more than 1.8% by mass, more preferably not more than 1.0% by mass, further preferably not more than 0.5% by mass, yet further preferably not more than 0.3% by mass. If the content exceeds 1.8% by mass, elongation at break and abrasion resistance tend to deteriorate. It is noted that in the present invention, the vinyl content (1,2-bond butadiene unit quantity) and the cis-1,4 bond content of a high-cis BR, a rare-earth-metal-catalyzed high-cis BR and a modified BR can be measured by infrared absorption spectrum analysis.

It is preferable that the SPB-containing BR is not the one in which 1,2-syndiotactic polybutadiene crystals (SPB) are simply dispersed in the BR, but the one in which 1,2-syndiotactic polybutadiene crystals (SPB) are chemically bonded with the BR and dispersed, since it is more excellent in crack growth resistance.

The melting point of 1,2-syndiotactic polybutadiene crystals is preferably not less than 180°C, more preferably not less than 190°C. When the melting point of 1,2-syndiotactic polybutadiene crystals is less than 180°C, there is a tendency that the crystals are melted during vulcanization of a tire and the hardness of the rubber composition is decreased. On the other hand, the melting point of 1,2-syndiotactic polybutadiene crystals is preferably not more than 220°C, more preferably not more than 210°C. When the melting point of 1,2-syndiotactic polybutadiene crystals is more than 220°C, there is a tendency that the dispersibility in the rubber composition is deteriorated due to the increase of the molecular weight of the BR and extrusion processability is deteriorated.

The content of a boiling n-hexane insoluble matter in the SPB-containing BR is preferably not less than 2.5% by mass, more preferably not less than 8% by mass. When the content is less than 2.5% by mass, the hardness of the rubber composition tends to be insufficient. On the other hand, the content of the boiling n-hexane insoluble matter is preferably not more than 22% by mass, more preferably not more than 20% by mass, further preferably not more than 18% by mass. When the content exceeds 22% by mass, the viscosity of the BR itself becomes high and there is a tendency that the dispersibility of the BR and a filler in the rubber composition deteriorates. Here, the boiling n-hexane insoluble matter indicates 1,2-syndiotactic polybutadiene in the SPB-containing BR.

Examples of the modified BR include a terminal-modified BR coupled with tin and a terminal-modified BR having an alkoxysilyl group and/or an amino group. Among them, the modified BR obtained by performing polymerization of 1,3-butadiene with a lithium initiator and then adding a tin compound, and further having the terminal molecules bonded with a tin-carbon bond is preferable.

Examples of the lithium initiator include lithium compounds such as alkyllithium, aryllithium, vinyllithium, organotin lithium compounds and organonitrogen lithium compounds, lithium metal and the like. By using the lithium initiator as the initiator for a modified BR, a modified BR having a high vinyl content and a low cis content can be produced.

Examples of the tin compound include tin tetrachloride, butyltin trichloride, dibutyltin dichloride, dioctyltin dichloride, tributyltin chloride, triphenyltin chloride, diphenyldibutyltin, triphenyltin ethoxide, diphenyldimethyltin, ditolyltin chloride, diphenyltin dioctanoate, divinyldiethyltin, tetrabenzyltin, dibutyltin distearate, tetraallyltin, p-tributyltin styrene and the like, and these tin compounds may be used alone, or may be used in combination with two or more thereof.

The content of tin atoms in the modified BR is preferably not less than 50 ppm, more preferably not less than 60 ppm. When the content of tin atoms is less than 50 ppm, the effect of accelerating the dispersion of carbon black in the modified BR tends to be small and additionally, the tanδ tends to increase. On the other hand, the content of tin atoms is preferably not more than 3,000 ppm, more preferably not more than 2,500 ppm, further preferably not more than 250 ppm. When the content of tin atoms exceeds 3,000 ppm, cohesiveness of the kneaded product tends to be poor, the edges thereof tend not to be aligned, and therefore extrusion processability of the kneaded product tends to deteriorate.

The molecular weight distribution (Mw/Mn) of the modified BR is preferably not more than 2.0, more preferably not more than 1.5. When the Mw/Mn of the modified BR exceeds 2.0, the dispersibility of carbon black tends to deteriorate and the tanδ tends to increase. It is noted that the Mw and Mn in the present invention is a value calculated with polystyrene standards using a gel permeation chromatograph (GPC).

The vinyl bond amount of the modified BR is preferably not less than 5% by mass, more preferably not less than 7% by mass. When the vinyl bond amount of the modified BR is less than 5% by mass, it tends to be difficult to polymerize (produce) a modified BR. On the other hand, the vinyl bond amount of the modified BR is preferably not more than 50% by mass, more preferably not more than 20% by mass. When the vinyl bond amount of the modified BR exceeds 50% by mass, there is a tendency that heat build-up property is increased and rolling resistance is deteriorated.

When the rubber composition comprises the BR as a diene rubber component, the content thereof is preferably not less than 10% by mass, more preferably not less than 15% by mass. If the content of the BR is less than 10% by mass, abrasion resistance and crack growth resistance tend to be insufficient. On the other hand, the content of the BR is preferably not more than 80% by mass, more preferably not more than 70% by mass, further preferably not more than 60% by mass. If the content of the BR exceeds 80% by mass, grip performance tends to be insufficient. Additionally, when two or more kinds of BRs are used together, the total amount of combined BRs is regarded as the content of BR.

The NR is not limited particularly and ones generally used in the production of tires can be used, and examples thereof include SIR20, RSS#3, TSR20 and the like.

When the rubber composition comprises the NR as a diene rubber component, the content thereof is preferably not less than 10% by mass, more preferably not less than 15% by mass in view of excellent dry grip performance and wet grip performance. On the other hand, the content of the NR is preferably not more than 60% by mass, more preferably not more than 50% by mass, further preferably not more than 40% by mass. If the content of the NR exceeds 60% by mass, grip performance tends to be insufficient.

By using the rubber composition comprising at least one selected from the group consisting of stearic acid, a metal salt of saturated fatty acid and a specific mold release agent, the rubber composition of the present invention can prevent raw rubber from adhering on a mold excessively and thus can prevent contamination of the mold.

The stearic acid is not limited particularly and ones generally used in the production of tires can be used. The rubber composition comprising the stearic acid is preferable since the working viscosity can be reduced and the suitable vulcanization speed can be ensured. Moreover, it is preferable since zinc stearate bonded with zinc oxide described below is bloomed on the surface of rubber to improve high slipping property and prevent mold contamination or an improvement of dispersibility of the zinc oxide can be expected. Additionally, it is preferable since processability, vulcanization speed and tire performance can be maintained while preventing mold contamination by using the stearic acid together with the specific mold release agent.

Ones generally used in the production of tires can be used as the metal salt of saturated fatty acid. Examples thereof include zinc stearate, a mixture of zinc soaps of saturated fatty acids having various number of carbon atoms and the like.

The zinc stearate is not limited particularly and ones generally used in the production of tires can be used. The use of the zinc stearate is preferable since it has extremely low solubility into rubber and there is a case where zinc stearate is used in a tire molding machine as an adhesion preventing agent and thus when the rubber composition comprises zinc stearate, it is bloomed on the surface of rubber as white crystal particles to improve slipping property, raw rubber hardly adheres on the mold excessively and mold contamination can be prevented.

Examples of the mixture of zinc soaps of saturated fatty acids having various number of carbon atoms include Aktiplast PP (mainly composed of zinc soaps of saturated fatty acid having 17 carbon atoms) produced by Rhein Chemie Corporation and the like. By preparing the rubber composition comprising such mixture, raw rubber that hardly adheres on a mold excessively without deteriorating tread tackiness to casing and mold contamination can be prevented.

The specific mold release agent is a mold release agent comprising at least one selected from the group consisting of a metal salt of fatty acid, a fatty acid amide and an amide ester. Examples of a metal in the metal salt of fatty acid include calcium, zinc, potassium, sodium and the like. Among them, a fatty acid calcium salt is preferable since it is not expensive, does not cause environmental pollution and does not affect the vulcanization speed.

Examples of the specific mold release agent include WB16 produced by Struktol Co., Ltd. which is a mixture of a fatty acid calcium salt and a fatty acid amide, Aflux 16 produced by Rhein Chemie Corporation which is a mixture of a fatty acid calcium salt and an amide ester, Aflux37 produced by Rhein Chemie Corporation which comprises an amide ester and the like.

The total content of at least one selected from the group consisting of stearic acid, a metal salt of saturated fatty acid and a specific mold release agent based on 100 parts by mass of the diene rubber component is not less than 2.5 parts by mass, preferably not less than 3.5 parts by mass, more preferably not less than 4.0 parts by mass provided that the rubber composition includes 0.1 to 4.0 parts by mass of the mold release agent. If the total content is less than 2.5 parts by mass, processability tends to deteriorate and the effect of preventing mold contamination tends to be insufficient. On the other hand, the total content is not more than 8.0 parts by mass, preferably not more than 7.0 parts by mass provided that the rubber composition includes 0.1 to 4.0 parts by mass of the mold release agent. If the total content exceeds 8.0 parts by mass, abrasion resistance, tackiness and cohesiveness of rubber, and tackiness to adjacent members tend to deteriorate.

In the case where the rubber composition comprises the stearic acid, the content thereof based on 100 parts by mass of the diene rubber component is preferably not less than 1.5 parts by mass, more preferably not less than 2.0 parts by mass. If the content of the stearic acid is less than 1.5 parts by mass, processability tends to deteriorate and the hardness of the rubber tends to decrease. On the other hand, the content of the stearic acid is preferably not more than 5.0 parts by mass, more preferably not more than 4.5 parts by mass. If the content of stearic acid exceeds 5.0 parts by mass, tackiness and elongation at break at an oxidative degradation tend to deteriorate.

In the case where the rubber composition comprises zinc stearate as the metal salt of saturated fatty acid, the content thereof based on 100 parts by mass of the diene rubber component is preferably not less than 0.2 part by mass, more preferably not less than 0.3 part by mass. If the content of the zinc stearate is less than 0.2 part by mass, the effect of preventing mold contamination tends to be small. On the other hand, the content of the zinc stearate is preferably not more than 0.5 part by mass, more preferably not more than 0.4 part by mass. If the content of the zinc stearate exceeds 0.5 part by mass, blooming on the raw rubber surface becomes excess and there is a tendency that tackiness to adjacent members deteriorates.

In the case where the rubber composition comprises the mixture of zinc soaps of saturated fatty acids having various number of carbon atoms as the metal salt of saturated fatty acid, the content thereof based on 100 parts by mass of the diene rubber component is preferably not less than 0.5 part by mass, more preferably not less than 1.0 part by mass. If the content of the mixture is less than 0.5 part by mass, there is a tendency that slipping property with a mold and the effect of preventing mold contamination become insufficient. On the other hand, the content of the mixture is preferably not more than 2.0 parts by mass, more preferably not more than 1.5 parts by mass. If the content of the mixture exceeds 2.0 parts by mass, there is a tendency that tread tackiness to casing deteriorates and a blown rubber (a rubber composition in which an interface adhesion thereof is peeled in a blister form) is easily generated.

The content of the specific mold release agent based on 100 parts by mass of the diene rubber component is not less than 0.1 part by mass, more preferably not less than 0.5 part by mass. If the content of the specific mold release agent is less than 0.1 part by mass, slipping property of the rubber composition at vulcanization step tends not to be improved enough and the effect of preventing mold contamination tends to be insufficient. On the other hand, the content of the specific mold release agent is not more than 4.0 parts by mass, more preferably not more than 3.5 parts by mass. If the content exceeds 4.0 parts by mass, tread tackiness to casing tends to be deteriorated.

By using the rubber composition comprising the resin, dry grip performance, wet grip performance and elongation at break can be improved.

A softening point of the resin is not lower than 82°C. When the softening point is lower than -40°C, there is a tendency that the affinity of the resin with the rubber component deteriorates, grip performance is not improved enough, and the amount of the resin decreases due to the volatilization with aging and transition into adjacent members. On the other hand, the softening point of the resin is not higher than 160°C. When the softening point is higher than 170°C, energy loss becomes large and there is a tendency that fuel efficiency degrades, it becomes difficult to disperse during kneading and elongation at break and/or abrasion resistance deteriorates. In the specification of the instant application, the softening point of the resin is one specified in JIS K6220-1: 2001 and is a temperature at the time when the ball has dropped in the measurement with the ring and ball softening point measuring device.

Such resin is not limited especially and examples thereof include a C5 polymer, a C9 polymer, an aromatic vinyl polymer, a coumarone-indene resin, an indene resin, a polyterpene resin, an aromatic terpene resin and a terpene phenol resin. Among them, an aromatic vinyl polymer, a coumarone-indene resin, a polyterpene resin, an aromatic terpene resin and a terpene phenol resin are preferable since fuel efficiency and grip performance can be obtained in a favorable balance, and an aromatic terpene resin and an aromatic vinyl polymer are more preferable.

The content of the resin based on 100 parts by mass of the diene rubber component is not less than 1 part by mass, preferably not less than 2 parts by mass, more preferably not less than 3 parts by mass. When the content of the resin is less than 1 part by mass, the effect obtained by using the rubber composition comprising the resin tends not to be obtained. On the other hand, the content of the resin is not more than 50 parts by mass, preferably not more than 40 parts by mass, and for commercially available tires for passenger cars, the content is more preferably not more than 35 parts by mass. When the content of the resin is more than 50 parts by mass, there is a tendency that problems such as adhesion of rubber to a kneading machine, a defective discharge, inconvenience of opening and closing of a drop door, contamination of a vulcanization mold and insufficient grip performance in cold weather easily arise.

Examples of the silica include silica prepared by dry process (silicic anhydride) and silica prepared by wet process (hydrous silicic acid). By using the rubber composition comprising silica, wet grip performance can be improved. The silica prepared by wet process is preferable because it has more silanol groups on its surface and has many reaction points with a silane coupling agent.

The BET specific surface area of the silica is not less than 80 m²/g, preferably not less than 85 m²/g, more preferably not less than 90 m²/g, further preferably not less than 100 m²/g. If the BET specific surface area is less than 80 m²/g, abrasion resistance tends to be insufficient. On the other hand, the BET specific surface area of the silica is not more than 270 m²/g, preferably not more than 265 m²/g, more preferably not more than 260 m²/g, further preferably not more than 255 m²/g. If the BET specific surface area exceeds 270 m²/g, there is a tendency that processability and wet grip performance are deteriorated. It is noted that the BET specific surface area of the silica in the specification of the instant application is the value measured with the BET method according to ASTM D3037-81.

The content of the silica based on 100 parts by mass of the diene rubber component is not less than 30 parts by mass, preferably not less than 35 parts by mass, more preferably not less than 40 parts by mass. If the content of the silica is less than 30 parts by mass, the effect of improving wet performance, which is obtained by the use of silica, tends to be insufficient. On the other hand, the content of the silica is not more than 140 parts by mass, preferably not more than 135 parts by mass, more preferably not more than 130 parts by mass. If the content of the silica exceeds 140 parts by mass, there is a tendency that processability and resistance at break (chipping resistance) are deteriorated.

Any silane coupling agents conventionally used can be used, and examples thereof include: sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(4-trimethoxysilylbutyl)tetrasulfide, bis(3-triethoxysilylpropyl)trisulfide, bis(2-triethoxysilylethyl)trisulfide, bis(4-triethoxysilylbutyl)trisulfide, bis(3-trimethoxysilylpropyl)trisulfide, bis(2-trimethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyl tetrasulfide, 3-triethoxysilylpropyl-N,N-dimethylthiocarbamoyl tetrasulfide, 2-triethoxysilylethyl-N,N-dimethylthiocarbamoyl tetrasulfide, 2-trimethoxysilylethyl-N,N-dimethylthiocarbamoyl tetrasulfide, 3-trimethoxysilylpropylbenzothiazolyl tetrasulfide, 3-triethoxysilylpropylbenzothiazole tetrasulfide, and 3-trimethoxysilylpropyl methacrylate monosulfide; mercapto silane coupling agents such as 3-mercaptopropyltrimethoxysilane, 3-mercaptopropyltriethoxysilane, 2-mercaptoethyltrimethoxysilane, 2-mercaptoethyltriethoxysilane, and 8-mercaptooctanoyltriethoxysilane; vinyl silane coupling agents such as vinyltriethoxysilane and vinyltrimethoxysilane; amino silane coupling agents such as 3-aminopropyltriethoxysilane, 3-aminopropyltrimethoxysilane, 3-(2-aminoethyl)aminopropyltriethoxysilane, and 3-(2-aminoethyl)aminopropyltrimethoxysilane; glycidoxy silane coupling agents such as γ-glycidoxypropyltriethoxysilane, γ-glycidoxypropyltrimethoxysilane, γ-glycidoxypropylmethyldiethoxysilane, and γ-glycidoxypropylmethyldimethoxysilane; nitro silane coupling agents such as 3-nitropropyltrimethoxysilane and 3-nitropropyltriethoxysilane; chloro silane coupling agents such as 3-chloropropyltrimethoxysilane, 3-chloropropyltriethoxysilane, 2-chloroethyltrimethoxysilane, and 2-chloroethyltriethoxysilane; and the like. These silane coupling agents may be used alone, or may be used in combination with two or more thereof. Among them, bis(3-triethoxysilylpropyl)tetrasulfide and/or bis(3-triethoxysilylpropyl)disulfide are preferable in view of their good processability. Further, sulfide silane coupling agents and/or mercapto silane coupling agents are preferable in view of their strong binding force with silica and excellent heat build-up property. In addition, mercapto silane coupling agents are more preferable since they can suitably improve fuel efficiency and abrasion resistance. It is preferable to use a mercapto silane coupling agent which has a high reactivity with silica or a polymer as the silane coupling agent, since an unreacted component hardly remains after kneading, raw rubber hardly adheres on a mold excessively and mold contamination can be prevented. Additionally, since the unreacted component of a silane coupling agent is small, a shrink at extrusion and foaming of ethanol can be prevented. It is noted that the foaming of ethanol is a phenomenon in which the unreacted silane coupling agent causes a coupling reaction due to the heat at extrusion processing and generates micro air bubbles of ethanol of the resulting product in the extruded rubber material. Examples of mercapto silane coupling agents include NXT-Z100, NXT-Z45 and NXT produced by Momentive Performance Materials INC and Si363 produced by Evonik Degussa GmbH.

The content of a silane coupling agent based on 100 parts by mass of silica is not less than 3 parts by mass, preferably not less than 4 parts by mass, more preferably not less than 5 parts by mass. If the content of the silane coupling agent is less than 3 parts by mass, the effect of improving dispersibility and the like tends not to be obtained enough and abrasion resistance tends to be insufficient. On the other hand, the content of the silane coupling agent is not more than 10.0 parts by mass, preferably not more than 9.5 parts by mass, more preferably not more than 9.0 parts by mass. If the content of the silane coupling agent exceeds 10.0 parts by mass, there is a tendency that the sufficient coupling effect and the sufficient effect of dispersing silica are not obtained, reinforcing property is deteriorated, an unreacted silane coupling agent after kneading easily remains and the crosslinking density of the vulcanizate becomes too high.

The amount of the unreacted silane coupling agent in the rubber composition before vulcanization based on 100 parts by mass of the diene rubber component is not more than 1.0 part by mass, preferably not more than 0.2 part by mass, more preferably 0 part by mass since mold contamination, a shrink at extrusion and foaming of ethanol can be prevented. It is noted that in the specification of the instant application, the amount of the unreacted silane coupling agent in the rubber composition before vulcanization is a value quantified with a gas chromatograph mass spectrometer (GC-MS) within two hours after storing the kneaded product immediately after a kneading step F in a refrigerator of not higher than 10°C. According to the quantification with a GC-MS, the amount of the silane coupling agent in a target kneaded product is calculated based on a standard elution pattern of the silane coupling agent.

In addition to the above components, the rubber composition of the present invention may also appropriately comprise compounding agents conventionally used in the production of rubber compositions and the examples thereof include a filler for reinforcement such as carbon black, a zinc oxide, an anti-aging agent, oil, wax, a vulcanization agent such as sulfur, a vulcanization accelerator and the like.

It is preferable that the rubber composition comprises carbon black since reinforcing property, resistance to ultraviolet deterioration and abrasion resistance of the rubber composition can be improved. Examples of carbon black include ones generally used in the production of tires such as SAF, ISAF, HAF, FF, FEF and GPF, and these carbon black may be used alone, or may be used in combination with two or more thereof.

In the case where the rubber composition comprises carbon black, the content thereof based on 100 parts by mass of the diene rubber component is preferably not less than 5 parts by mass, more preferably not less than 10 parts by mass, further preferably not less than 20 parts by mass. If the content of carbon black is less than 5 parts by mass, resistance to ultraviolet deterioration and reinforcing property tend to deteriorate. On the other hand, the content of carbon black is preferably not more than 120 parts by mass, more preferably not more than 100 parts by mass, and for commercially available tires for passenger cars, the content is more preferably not more than 60 parts by mass. If the content of carbon black exceeds 120 parts by mass, there is a tendency that heat build-up is increased and rolling resistance is deteriorated while dry grip performance is increased.

It is preferable that the rubber composition comprises zinc oxide since processability and reversion resistance can be improved. Further, by using together with the above stearic acid, a reaction is caused by heating in the vulcanization step to generate zinc stearate, and this zinc stearate can further improve slipping property of the rubber composition for a tread and thus raw rubber hardly adheres on a mold excessively and mold contamination can be prevented.

In the case where the rubber composition comprises zinc oxide, the content thereof based on 100 parts by mass of the diene rubber component is preferably not less than 0.5 part by mass, more preferably not less than 1.0 part by mass. If the content of zinc oxide is less than 0.5 part by mass, processability tends to deteriorate (due to high viscosity). On the other hand, the content of zinc oxide is not more than 2.5 parts by mass, more preferably not more than 2.0 parts by mass. If the content of zinc oxide exceeds 2.5 parts by mass, there is a tendency that the zinc oxide adheres on the surface of silica and inhibits a coupling reaction, the unreacted silane coupling agent increases and mold contamination becomes worse.

Anti-aging agents are not limited especially as long as they are generally used in the production of rubber compositions and examples thereof include an amine anti-aging agent such as a diphenylamine anti-aging agent and a phenylenediamine anti-aging agent; a quinoline anti-aging agent; a phenol anti-aging agent such as a monophenol anti-aging agent, a bisphenol anti-aging agent, a trisphenol anti-aging agent and a polyphenol anti-aging agent.

With respect to the amine anti-aging agent, examples of an diphenylamine anti-aging agent include p-isopropoxydiphenylamine, p-(p-toluenesulfonylamide)-diphenylamine, N,N-diphenylethylenediamine, octylated diphenylamine and the like. Examples of an phenylenediamine anti-aging agent include N-(1,3-dimethylbutyl)-N'-phenyl-p-phenylenediamine, N-isopropyl-N'-phenyl-p-phenylenediamine, N,N'-diphenyl-p-phenylenediamine, N,N'-di-2-naphthyl-p-phenylenediamine, N-cyclohexyl-N'-phenyl-p-phenylenediamine, N,N'-bis(1-methylheptyl)-p-phenylenediamine, N,N'-bis(1,4-dimethylpentyl)-p-phenylenediamine, N,N'-bis(1-ethyl-3-methylpentyl)-p-phenylenediamine, N-4-methyl-2-pentyl-N'-phenyl-p-phenylenediamine, N,N'-diaryl-p-phenylenediamine, hindered diaryl-p-phenylenediamine, phenylhexyl- p-phenylenediamine, phenyloctyl-p-phenylenediamine, N-phenyl-N'-(3-methacryloyloxy-2-hydroxypropyl)-p-phenylenediamine and the like.

Examples of the quinoline anti-aging agent include a 2,2,4-trimethyl-1,2-dihydroquinoline polymer, 6-ethoxy-2,2,4-trimethyl-1,2-dihydroquinoline, 6-anilino-2,2,4-trimethyl-1,2-dihydroquinoline, poly-2,2,4-trimethyl-1,2-dihydroquinoline and the like.

With respect to the phenol anti-aging agent, examples of a monophenol anti-aging agent include 2,6-di-tert-butyl-4-methylphenol, 2,6-di-tert-butyl-4-ethylphenol, 2,6-di-tert-butylphenol, 1-oxy-3-methyl-4-isopropylbenzene, 2-methyl-4,6-bis[(octylthio)methyl]phenol, butylhydroxyanisol, 2,4-dimethyl-6-tert-butylphenol, n-octadecyl-3-(4'-hydroxy-3',5'-di-tert-butylphenyl)propionate, a styrenated phenol, a phenol derivative and the like. Examples of a bisphenol anti-aging agent, a trisphenol anti-aging agent and a polyphenol anti-aging agent include 2,2'-methylene-bis-(4-methyl-6-tert-butylphenol), 2,2'-methylene-bis-(4-ethyl-6-tert-butylphenol), 4,4'-butylidene-bis-(3-methyl-6-tert-butylphenol), 1,1'-bis-(4-hydroxyphenyl)-cyclohexane, tetrakis-[methylene-3-(3',5'-di-tert-butyl-4'-hydroxyphenyl)propionate] methane and the like.

Among these various anti-aging agents, the quinoline anti-aging agent and the amine anti-aging agent are preferable and it is more preferable to use both the quinoline anti-aging agent and the amine anti-aging agent. Though the amine anti-aging agent is highly volatile, causes brown discoloration on the surface of rubber and increased tanδ and the quinoline anti-aging agent causes low ozone resistance and mold contamination, by using both the quinoline anti-aging agent and the amine anti-aging agent, these properties can be compensated and a rubber composition which is excellent in the effect of preventing degradation due to thermal oxidation, the effect of preventing ozone crack and the effect of preventing thermal decomposition of the rubber component can be produced.

In the case where the rubber composition comprises an anti-aging agent, the content thereof is preferably not less than 2 parts by mass, more preferably not less than 3 parts by mass based on 100 parts by mass of the diene rubber component. If the content of the anti-aging agent is less than 2 parts by mass, the effect of preventing degradation due to thermal oxidation, the effect of preventing ozone crack and the effect of preventing thermal decomposition of the rubber component tend to be insufficient. On the other hand, the content of the anti-aging agent is preferably not more than 10 parts by mass, more preferably not more than 8 parts by mass. If the content of the anti-aging agent exceeds 10 parts by mass, there is a tendency that the brown discoloration on the surface of rubber is arisen and tanδ and mold contamination deteriorate. Additionally, when two or more kinds of anti-aging agents are used together, the total amount of combined anti-aging agents is regarded as the content of the anti-aging agent.

In the case where the rubber composition comprises the amine anti-aging agent, the content thereof is preferably not less than 1.5 parts by mass, more preferably not less than 2.0 parts by mass based on 100 parts by mass of the diene rubber component. If the content of the amine anti-aging agent is less than 1.5 parts by mass, the effect of preventing degradation due to thermal oxidation, the effect of preventing ozone crack and the effect of preventing thermal decomposition of the rubber component tend to be insufficient. On the other hand, the content of the amine anti-aging agent is preferably not more than 8 parts by mass, more preferably not more than 7 parts by mass. If the content of the amine anti-aging agent exceeds 8 parts by mass, there is a tendency that the brown discoloration on the surface of rubber is arisen and tanδ deteriorates.

In the case where the rubber composition comprises the quinoline anti-aging agent, the content thereof is preferably not less than 0.1 part by mass, more preferably not less than 0.4 part by mass based on 100 parts by mass of the diene rubber component, since the effect of preventing degradation due to thermal oxidation and the effect of preventing thermal decomposition of the rubber component are excellent. On the other hand, the content of the quinoline anti-aging agent is preferably not more than 2.4 parts by mass, more preferably not more than 0.9 part by mass since mold contamination can be further prevented. If the content of the quinoline anti-aging agent exceeds 2.4 parts by mass, mold contamination tends to become worse.

In the case where the rubber composition comprises the phenol anti-aging agent, the content thereof is preferably not less than 0.1 part by mass, more preferably not less than 0.2 part by mass based on 100 parts by mass of the diene rubber component. If the content of the phenol anti-aging agent is less than 0.1 part by mass, the effect of preventing degradation due to thermal oxidation and the effect of preventing thermal decomposition of the rubber component tend to be insufficient. On the other hand, the content of the phenol anti-aging agent is preferably not more than 2.0 parts by mass, more preferably not more than 1.5 parts by mass. If the content of the phenol anti-aging agent exceeds 2.0 parts by mass, tanδ tends to deteriorate.

Examples of oil that can be used for the rubber composition of the present invention include aromatic oil, process oil, mineral oil such as paraffin oil and the like.

The rubber composition of the present invention comprises oil in a content of not less than 15 parts by mass based on 100 parts by mass of the diene rubber component. If the content of the oil is less than 5 parts by mass, there is a tendency that tackiness of a bloomed product becomes high and mold contamination easily arises. On the other hand, the content of the oil is not more than 50 parts by mass, more preferably not more than 45 parts by mass. If the content of the oil exceeds 50 parts by mass, steering stability and abrasion resistance tend to be degraded.

Well-known methods may be used as a production method of the rubber composition and for example, the rubber composition can be produced by kneading each of the above compounding agents with a Banbury mixer, a kneader or an open roll, followed by vulcanization.

The rubber composition of the present invention can be used for respective component of a tire, a rubber sole of shoes, a rubber belt, a strong grip floor material and the like. A tire which has a tread composed of the rubber composition of the present invention is particularly preferable since mold contamination can be prevented while maintaining abrasion resistance and wet grip performance.

A tire of the present invention can be produced with a general method using the rubber composition of the present invention. That is, the rubber composition of the present invention comprising the above compounding agents as necessary based on the diene rubber component is, in the unvulcanized state, processed by extrusion into a one-layered tread or into a cap tread form if the tread is a two-layered tread composed of a cap tread (surface layer) and a base tread (inner layer), laminated with other components of a tire in a tire molding machine and molded in a general method to produce an unvulcanized tire. This unvulcanized tire is heated and pressurized in a vulcanizer and the tire of the present invention can be produced.

### EXAMPLES

Though the present invention is explained based on Examples, the present invention is not limited only thereto.

Various kinds of chemicals used in Examples and Comparative Examples are described below.
NR: TSR 20
High-cis BR: CB 25 manufactured by Lanxess AG (Nd-catalyzed high-cis BR, Mooney viscosity ML₁₊₄: 44, Mw/Mn: 1.78, Mw: 500,000,
Mn: 280,000, cis 1,4 bond content: 96.2% by mass, trans 1,4 bond
content: 3.1 % by mass, vinyl content: 0.7% by mass)
Modified S-SBR: modified S-SBR (styrene content: 37% by mass, vinyl
content: 56% by mass, Mw: 270,000) prepared in the following preparation example of modified S-SBR
Carbon black: SHOBLACK N220 manufactured by CABOT Japan K. K.
(N220, BET: 114 m²/g)
Silica 1: ULTRASIL U360 manufactured by Evonik Degussa GmbH
(BET: 50 m²/g)
Silica 2: Z1085Gr manufactured by Rhodia Co., Ltd. (BET: 80 m²/g)
Silica 3: Z115Gr manufactured by Rhodia Co., Ltd. (BET: 115 m²/g)
Silica 4: ULTRASIL VN3 manufactured by Evonik Degussa GmbH (BET: 175 m²/g)
Silica 5: ULTRASIL U9000Gr manufactured by Evonik Degussa GmbH (BET: 235 m²/g)
Silane coupling agent 1: NXT-Z45 produced by Momentive Performance Materials INC.
Silane coupling agent 2: NXT (8-mercaptooctanoyltriethoxysilane) manufactured by Momentive Performance Materials INC.
Silane coupling agent 3: Si69 (bis(3-triethoxysilylpropyl)tetrasulfide) manufactured by Evonik Degussa GmbH
Silane coupling agent 4: Si75 (bis(3-triethoxysilylpropyl)disulfide) manufactured by Evonik Degussa GmbH
Silane coupling agent 5: Si363 manufactured by Evonik Degussa GmbH
Resin 1: SYLVARES SA 85 (copolymer of α-methylstyrene and styrene,
softening point: 85°C, Mw: 1000) manufactured by Arizona Chemical Corporation
Resin 2: NOVARES C120 (coumarone-indene resin, softening point: 115 to 125°C) manufactured by Rutgers Chemicals
Resin 3: NOVARES C10 (liquid coumarone-indene resin, softening point: 5 to 15°C) manufactured by Rutgers Chemicals
Resin 4: SYLVARES TR 7125 (polyterpene resin, softening point: 125°C) manufactured by Arizona Chemical Corporation
Resin 5: YS resin PX1150 (polyterpene resin, softening point: 115°C) manufactured by YASUHARA CHEMICAL CO., LTD.
Resin 6: YS resin PX800 (polyterpene resin, softening point: 80°C) manufactured by YASUHARA CHEMICAL CO., LTD.
Resin 7: SYLVARES TP 160 (terpene phenol resin, softening point: 160°C) manufactured by Arizona Chemical Corporation
Resin 8: SYLVARES TP 115 (terpene phenol resin, softening point: 115°C) manufactured by Arizona Chemical Corporation
Resin 9: YS Resin TO125 (aromatic modified terpene resin, softening point: 125°C) manufactured by YASUHARA CHEMICAL CO., LTD.
Oil: VIVATEC500 (TDAE oil) manufactured by H&R Co., Ltd.
Wax: OZOACE 355 manufactured by Nippon Seiro Co., Ltd.
Anti-aging agent 1: Antigen 6C (6PPD, N-(1,3-dimethylbutyl)-N'-phenyl-p-phenylenediamine) manufactured by Sumitomo Chemical Co. LTD.
Anti-aging agent 2: Nocrac 224 (TMQ, 2,2,4-trimethyl-1,2-dihydroquinoline polymer) manufactured by OUCHI SHINKO CHEMICAL INDUSTRIAL CO., LTD.
Anti-aging agent 3: Nocrac NS-5 (2,2'-methylene-bis(4-ethyl-6-t-butyl phenol)) manufactured by OUCHI SHINKO CHEMICAL INDUSTRIAL CO., LTD.
Zinc oxide: Ginrei R manufactured by TOHO ZINC CO., LTD.
Stearic acid: stearic acid Tsubaki manufactured by NOF Corporation
Mold release agent 1: WB16 (a mixture of metal salt of fatty acid (fatty acid calcium) and fatty acid amide) manufactured by Struktol Co., Ltd.
Mold release agent 2: Aflux37 (containing amide ester) manufactured by Rhein Chemie Corporation
Mold release agent 3: Aflux16 (a mixture of fatty acid calcium salt and amide ester) manufactured by Rhein Chemie Corporation
Sulfur: HK200-5 (5% oil-containing sulfur powder) manufactured by Hosoi Chemical Industry Co., Ltd.
Vulcanization accelerator 1: Nocceler NS-G (TBBS, N-tert-butyl-2-benzothiazylsulfeneamide) manufactured by OUCHI SHINKO CHEMICAL INDUSTRIAL CO., LTD.
Vulcanization accelerator 2: Nocceler CZ (CBS, N-cyclohexyl-2-benzothiazolylsulfenamide) manufactured by OUCHI SHINKO CHEMICAL INDUSTRIAL CO., LTD.
Vulcanization accelerator 3: Nocceler D (DPG, 1,3-Diphenylguanidine) manufactured by OUCHI SHINKO CHEMICAL INDUSTRIAL CO., LTD.
Vulcanization accelerator 4: ACCEL TBZT (TBZTD, tetrabenzyl thiuram disulfide) manufactured by Kawaguchi Chemical Industry Co., Ltd.

The preparation example of the modified S-SBR and an analytical method thereof will be described.

### Preparation of terminal-modifying agent

Under nitrogen atmosphere, to a measuring flask of 100 mL were added 23.6 g of 3-(N,N-dimethylamino)propyltrimethoxysilane (manufactured by AZmax Co. Ltd.) and anhydrous hexane (manufactured by KANTO CHEMICAL CO., INC.) to obtain the total amount of 100 mL. Thus, a terminal-modifying agent was obtained.

### Preparation of modified S-SBR

To a sufficiently nitrogen-substituted pressure-resistant vessel of 30 L were added 18 L of n-hexane (manufactured by KANTO CHEMICAL CO., INC.), 740 g of styrene (manufactured by KANTO CHEMICAL CO., INC.), 1260 g of butadiene (available from TAKACHIHO TRADING CO., LTD) and 10 mmol of tetramethylethylenediamine (manufactured by KANTO CHEMICAL CO., INC.) and the temperature was elevated to 40°C. Then, 10 mL of butyllithium (manufactured by KANTO CHEMICAL CO., INC.) was added and the temperature was elevated to 50°C, followed by stirring for three hours. Then, 11 mL of the terminal-modifying agent was added, followed by stirring for 30 minutes. To a reaction solution were added 15 mL of methanol (manufactured by KANTO CHEMICAL CO., INC.) and 0.1 g of Nocrac 200 (manufactured by OUCHI SHINKO CHEMICAL INDUSTRIAL CO., LTD.), and then the reaction solution was put into a stainless steel vessel in which 18 L of methanol was contained to collect an aggregate. The obtained aggregate was dried under reduced pressure for 24 hours to obtain a modified S-SBR. As a result of analyses, the Mw was 270,000, a styrene content was 37% by mass, a vinyl content was 56% by mass and glass transition temperature was -15°C.

### Measurement method of weight-average molecular weight Mw

The weight-average molecular weight Mw of the copolymer was calculated with polystyrene standards based on the measured value obtained using a gel permeation chromatograph (GPC) (GPC-8000 series manufactured by Tosoh Corporation, detector: differential refractometer, column: TSKGEL SUPERMALTPORE HZ-M manufactured by Tosoh Corporation).

### Method of structural identification of copolymer

The structural identification of the copolymer was conducted using an apparatus of JNM-ECA series manufactured by JEOL Ltd. From the measurement results, the styrene content and vinyl content in the copolymer were calculated.

### EXAMPLES 1 to 43 and COMPARATIVE EXAMPLES 1 to 9

### Kneading step

According to the formulation shown in Tables 1 to 5, a base kneading step of kneading the rubber components, all of carbon black and a half amount of silica for 5 minutes with a 4L Banbury mixer (X kneading) and adding other chemicals other than vulcanizing agents (sulfur, vulcanization accelerator, crosslinking aid) and then kneading for four minutes (Y kneading) was conducted using the compound temperature at the time of discharge from mixer shown in Tables 1 to 5. Each time the X kneading and the Y kneading are finished, the mixture was processed into a sheet with a thickness of 10 mm and cooled for 20 minutes at room temperature using a large fan. Then, a F kneading of adding the vulcanizing agents to the kneaded product obtained in the base kneading step and kneading for 3 minutes at the compound temperature at the time of discharge from mixer of 100°C was conducted, the mixture was processed into a sheet with a thickness of 10 mm and cooled for 30 minutes at room temperature using a large fan to obtain unvulcanized rubber compositions.

### Extruding step

Using the obtained unvulcanized rubber compositions as a rubber composition constituting the cap tread, the unvulcanized rubber composition was molded by extrusion together with a base tread and wing rubber using a cold feed triple extruder to obtain raw tread extrudates.

### Tire molding step

The obtained raw tread extrudates were laminated with other components of a tire in a molding machine to produce unvulcanized raw covers.

### Vulcanization step

The unvulcanized raw covers were press-vulcanized using a vulcanization bladder under a condition of 183°C for ten minutes to produce tires for test (studless tire for passenger cars, size: 245/4OR18).

The following tests were conducted using the kneaded product immediately after the kneading step F, the unvulcanized raw cover and the obtained tires for test.

### <Quantitative determination of unreacted silane coupling agent>

After storing the kneaded product immediately after the kneading step F in a refrigerator having a temperature of not more than 10°C for 24 hours, the kneaded product was brought out from the refrigerator, followed by a quantitative measure of the amount of the unreacted silane coupling agent based on reference data of the used silane coupling agent with a gas chromatograph mass spectrometer GC-MS (HS-20 series manufactured by Shimadzu Corporation) to calculate the amount of the unreacted silane coupling agent (part by mass) based on 100 parts by mass of the diene rubber component. The smaller the value is, the less the amount of the unreacted silane coupling agent remaining in the rubber composition before vulcanization is, and it means that more silane coupling agents were reacted during the kneading step and which is favorable.

### <Contamination of tread surface>

Using a mold for patterned summer tire in which contaminated objects were removed by shot blasting or laser cleaning of the mold, the unvulcanized raw cover was continuously vulcanized under a vulcanization condition of 183°C for ten minutes and the number of tires vulcanized before the contamination of the tread surface (black lusterless that is different from that of peripheral can be visually observed from the tread shoulder to a buttress portion) was counted. The results are shown with indexes and the one in which the contamination of the tread surface was observed with the number of 1650 was regarded as 100. Additionally, a target value of the index of the contamination of the tread surface is not less than 140.

### <Abrasion resistance>

The test tires were loaded on a domestically produced FR vehicle of 2000 cc displacement, followed by the in-vehicle running on a test course on a dry asphalt road. The loaded position of control tires and test tires was changed at every 1000 km of running distance to average the effect on abrasion due to running. The amount of the remaining groove of the tread rubber in test tires after the running of 30,000 km was measured (8.0 mm in a new product) and the results are shown with indexes, regarding the result of Comparative Example 1 as 100. Additionally, a target value of the abrasion resistance index is not less than 90.

### <Wet grip performance>

The test tires were loaded on a domestically produced FR vehicle of 2000 cc displacement, followed by the in-vehicle running on a test course on a wet asphalt road for 10 laps. The stability of control at steering was sensorially evaluated by a test driver during the test and the results are shown with indexes, regarding the result of Comparative Example 1 as 100. Additionally, a target value of the wet grip performance index is not less than 90.

**TABLE 1**

| | | EX. | COMPARATIVE EXAMPLE | | | EXAMPLE | | | | | |
|---|---|---|---|---|---|---|---|---|---|---|---|
| | | 1 | 1 | 2 | 3 | 2 | 3 | 4 | 5 | 6 | 7 |
| Compounding amount (part by mass) | | | | | | | | | | | |
| High-cis BR | | 30 | 30 | 30 | 30 | 30 | 30 | 30 | 30 | 30 | 30 |
| Modified S-SBR | | 70 | 70 | 70 | 70 | 70 | 70 | 70 | 70 | 70 | 70 |
| Carbon black | | 15 | 15 | 65 | 65 | 15 | 15 | 15 | 15 | 15 | 15 |
| Silica 4 (BET: 175) | | 80 | 80 | 20 | 20 | 80 | 80 | 80 | 80 | 80 | 80 |
| Silane coupling agent 1 | | - | - | - | - | - | - | - | - | 6.4 | - |
| Silane coupling agent 2 | | - | - | - | - | 6.4 | 6.4 | 6.4 | - | - | - |
| Silane coupling agent 3 | | - | - | - | - | - | - | - | 4.8 | - | - |
| Silane coupling agent 4 | | 6.4 | 6.4 | 1.6 | 2.4 | - | - | - | - | - | - |
| Silane coupling agent 5 | | - | - | - | - | - | - | - | - | - | 6.4 |
| Resin 1 (SA85) | | 10 | 10 | 20 | 20 | 10 | 10 | 10 | 10 | 10 | 10 |
| Oil | | 20 | 20 | 10 | 10 | 20 | 20 | 20 | 20 | 20 | 20 |
| Wax | | 1.5 | 1.5 | 1.5 | 1.5 | 1.5 | 1.5 | 1.5 | 1.5 | 1.5 | 1.5 |
| Anti-aging agent 1 (6PPD) | | 3.0 | 3.0 | 3.0 | 3.0 | 3.0 | 3.0 | 3.0 | 3.0 | 3.0 | 3.0 |
| Anti-aging agent 2 (TMQ) | | 0.8 | 0.8 | 0.8 | 0.8 | 0.8 | 0.8 | 0.8 | 0.8 | 0.8 | 0.8 |
| Zinc oxide | | 2.0 | 2.0 | 2.0 | 2.0 | 2.0 | 2.0 | 2.0 | 2.0 | 2.0 | 2.0 |
| I | Mold release agent 1 (WB16) | | | | | | | | | | |
| II | Mold release agent 2 (Aflux37) | - | - | - | - | - | - | - | - | - | - |
| III | Mold release agent 3 (Aflux16) | 1.5 | - | 1.5 | - | 1.5 | 1.5 | 1.5 | 1.5 | 1.5 | 1.5 |
| IV | Zinc stearate | - | - | - | - | - | - | - | - | - | - |
| V | Stearic acid | 2.0 | 2.0 | 2.0 | 2.0 | 2.0 | 2.0 | 2.0 | 2.0 | 2.0 | 2.0 |
| Total amount of I to V | | 3.5 | 2.0 | 3.5 | 2.0 | 3.5 | 3.5 | 3.5 | 3.5 | 3.5 | 3.5 |
| Sulfur (containing 5% oil) | | 1.5 | 1.5 | 1.5 | 1.5 | 1.5 | 1.5 | 1.5 | 1.5 | 1.5 | 1.5 |
| Vulcanization accelerator 1 (TBBS) | | 1.7 | 1.7 | 1.7 | 1.7 | 1.7 | 1.7 | 1.7 | 1.7 | 1.7 | 1.7 |
| Vulcanization accelerator 3 (DPG) | | 2.0 | 2.0 | 2.0 | 2.0 | 2.0 | 2.0 | 2.0 | 2.0 | 2.0 | 2.0 |
| | | 1 | 1 | 2 | 3 | 2 | 3 | 4 | 5 | 6 | 7 |
| Temperature at the time of discharge in X/Y kneading step (°C) | | 155 | 155 | 155 | 155 | 170 | 155 | 140 | 140 | 140 | 155 |
| Mold temperature at the vulcanization step (°C) | | 183 | 183 | 183 | 183 | 183 | 183 | 183 | 183 | 183 | 183 |
| Evaluation result | | | | | | | | | | | |
| Unreacted silane coupling agent | | 0.20 | 0.19 | 0.06 | 0.66 | 0.00 | 0.00 | 0.03 | 0.55 | 0.00 | 0.00 |
| Contamination of tread surface | | 170 | 100 | 220 | 180 | 220 | 210 | 180 | 145 | 205 | 220 |
| Abrasion resistance | | 100 | 100 | 107 | 104 | 125 | 115 | 105 | 106 | 114 | 125 |
| Wet grip performance | | 100 | 100 | 70 | 70 | 105 | 102 | 100 | 94 | 102 | 105 |

**TABLE 2**

| | | COM. EX. | EXAMPLE | | | | | | | COM. EX. | EX. | COM. EX. |
|---|---|---|---|---|---|---|---|---|---|---|---|---|
| | | 4 | 8 | 9 | 10 | 11 | 12 | 13 | 14 | 5 | 15 | 6 |
| Compounding amount (part by mass) | | | | | | | | | | | | |
| High-cis BR | | 30 | 30 | 30 | 30 | 30 | 30 | 30 | 30 | 30 | 30 | 30 |
| Modified S-SBR | | 70 | 70 | 70 | 70 | 70 | 70 | 70 | 70 | 70 | 70 | 70 |
| Carbon black | | 40 | 30 | 20 | 5 | 30 | 5 | 15 | 15 | 15 | 15 | 15 |
| Silica 1 (BET: 50) | | 80 | - | - | - | - | - | - | - | - | - | - |
| Silica 2 (BET: 80) | | - | 80 | - | - | - | - | - | - | - | - | - |
| Silica 3 (BET: 115) | | - | - | 80 | - | - | 115 | - | - | - | - | - |
| Silica 4 (BET: 175) | | - | - | - | - | 60 | - | 80 | 80 | 80 | 80 | 80 |
| Silica 5 (BET: 235) | | - | - | - | 80 | - | - | - | - | - | - | - |
| Silane coupling agent 4 | | 6.4 | 6.4 | 6.4 | 6.4 | 4.8 | 9.2 | 4.8 | 3.2 | 1.6 | 8 | 9.6 |
| Resin 1 (SA85) | | 10 | 10 | 10 | 10 | 15 | 10 | 10 | 10 | 10 | 10 | 10 |
| Resin 2 (C120) | | - | - | - | - | 5 | - | - | - | - | - | - |
| Resin 3 (C10) | | - | - | - | - | - | 20 | - | - | - | - | - |
| Oil | | 20 | 20 | 20 | 25 | 15 | 20 | 20 | 20 | 20 | 20 | 20 |
| Wax | | 1.5 | 1.5 | 1.5 | 1.5 | 1.5 | 1.5 | 1.5 | 1.5 | 1.5 | 1.5 | 1.5 |
| Anti-aging agent 1 (6PPD) | | 3.0 | 3.0 | 3.0 | 3.0 | 3.0 | 3.0 | 3.0 | 3.0 | 3.0 | 3.0 | 3.0 |
| Anti-aging agent 2 (TMQ) | | 0.8 | 0.8 | 0.8 | 0.8 | 0.8 | 0.8 | 0.8 | 0.8 | 0.8 | 0.8 | 0.8 |
| Zinc oxide | | 2.0 | 2.0 | 2.0 | 2.0 | 2.0 | 2.0 | 2.0 | 2.0 | 2.0 | 2.0 | 2.0 |
| I | Mold release agent 1 (WB16) | - | - | - | - | - | - | - | - | - | - | - |
| II | Mold release agent 2 (Aflux37) | - | - | - | - | - | - | - | - | - | - | - |
| III | Mold release agent 3 (Aflux16) | 2.5 | 2.5 | 1.5 | 1.5 | 1.5 | 1.5 | 1.5 | 1.5 | 1.5 | 2.5 | 2.5 |
| IV | Zinc stearate | - | - | - | - | - | - | - | - | - | - | - |
| V | Stearic acid | 2.0 | 2.0 | 2.0 | 2.0 | 2.0 | 2.0 | 2.0 | 2.0 | 2.0 | 2.0 | 2.0 |
| Total amount of I to V | | 4.5 | 4.5 | 3.5 | 3.5 | 3.5 | 3.5 | 3.5 | 3.5 | 3.5 | 4.5 | 4.5 |
| Sulfur (containing 5% oil) | | 1.5 | 1.0 | 1.3 | 1.5 | 1.5 | 1.3 | 1.5 | 1.5 | 1.5 | 1.5 | 1.5 |
| Vulcanization accelerator 1 (TBBS) | | 1.7 | 2.3 | 1.9 | 1.7 | 1.7 | 1.9 | 1.7 | 1.7 | 1.7 | 1.7 | 1.7 |
| Vulcanization accelerator 3 (DPG) | | 2.0 | 2.3 | 2.2 | 2.0 | 2.0 | 2.2 | 2.0 | 2.0 | 2.0 | 2.0 | 2.0 |

| | | COM. EX. | EXAMPLE | | | | | | | COM. EX. | EX. | COM. EX. |
|---|---|---|---|---|---|---|---|---|---|---|---|---|
| | | 4 | 8 | 9 | 10 | 11 | 12 | 13 | 14 | 5 | 15 | 6 |
| Temperature at the time of discharge in X/Y kneading step (°C) | | 155 | 155 | 155 | 155 | 155 | 155 | 155 | 155 | 155 | 155 | 155 |
| Mold temperature at the vulcanization step(°C) | | 183 | 183 | 183 | 183 | 183 | 183 | 183 | 183 | 183 | 183 | 183 |
| Evaluation result | | | | | | | | | | | | |
| Unreacted silane coupling agent | | 2.55 | 0.92 | 0.57 | 0.04 | 0.17 | 0.56 | 0.02 | 0.00 | 0.00 | 0.78 | 1.87 |
| Contamination of tread surface | | 95 | 140 | 140 | 190 | 180 | 150 | 210 | 220 | 220 | 145 | 90 |
| Abrasion resistance | | 82 | 91 | 100 | 120 | 110 | 93 | 97 | 90 | 81 | 103 | 92 |
| Wet grip performance | | 100 | 95 | 100 | 103 | 92 | 111 | 99 | 93 | 88 | 101 | 103 |

**TABLE 3**

| | | EXAMPLE | | COM. EX. | EXAMPLE | | | | | COM. EX. | |
|---|---|---|---|---|---|---|---|---|---|---|---|
| | | 16 | 17 | 7 | 18 | 19 | 20 | 21* | 22 | 8 | 9 |
| Compounding amount (part by mass) | | | | | | | | | | | |
| High-cis BR | | 30 | 30 | 30 | 30 | 30 | 30 | 30 | 30 | 30 | 30 |
| Modified S-SBR | | 70 | 70 | 70 | 70 | 70 | 70 | 70 | 70 | 70 | 70 |
| Carbon black | | 20 | 20 | 20 | 15 | 15 | 15 | 15 | 15 | 15 | 15 |
| Silica 3 (BET: 115) | | 80 | 80 | 80 | - | - | - | - | - | - | - |
| Silica 4 (BET: 175) | | - | - | - | 80 | 80 | 80 | 80 | 80 | 80 | 80 |
| Silane coupling agent 4 | | 4.8 | 8 | 9.6 | 6.4 | 6.4 | 6.4 | 6.4 | 6.4 | 6.4 | 9.6 |
| Resin 1 (SA85) | | 10 | 10 | 10 | 10 | 10 | 10 | 10 | 10 | 10 | 10 |
| Oil | | 15 | 15 | 15 | 20 | 20 | 20 | 20 | 18 | 16 | 20 |
| Wax | | 1.5 | 1.5 | 1.5 | 1.5 | 1.5 | 1.5 | 1.5 | 1.5 | 1.5 | 1.5 |
| Anti-aging agent 1 (6PPD) | | 3.0 | 3.0 | 3.0 | 3.0 | 3.0 | 3.0 | 3.0 | 3.0 | 3.0 | 3.0 |
| Anti-aging agent 2 (TMQ) | | 0.8 | 0.8 | 0.8 | 0.8 | 0.8 | 0.8 | 0.8 | 0.8 | 0.8 | 0.8 |
| Zinc oxide | | 2.0 | 2.0 | 2.0 | 2.0 | 2.0 | 2.0 | 2.0 | 2.0 | 2.0 | 2.0 |
| I | Mold release agent 1 (WB16) | - | - | - | 1.5 | - | - | - | - | - | - |
| II | Mold release agent 2 (Aflux37) | - | - | - | - | 1.5 | - | - | - | - | - |
| III | Mold release agent 3 (Aflux16) | 1.5 | 2.5 | 2.5 | - | - | - | - | 4.5 | 5 | - |
| IV | Zinc stearate | - | - | - | - | - | 0.5 | - | - | - | - |
| V | Stearic acid | 2.0 | 2.0 | 2.0 | 2.0 | 2.0 | 2.0 | 4.0 | 2.0 | 3.5 | 2.0 |
| Total amount of I to V | | 3.5 | 4.5 | 4.5 | 3.5 | 3.5 | 2.5 | 4.0 | 6.5 | 8.5 | 2.0 |
| Sulfur (containing 5% oil) | | 1.3 | 1.3 | 1.3 | 1.5 | 1.5 | 1.5 | 1.5 | 1.5 | 1.5 | 1.5 |
| Vulcanization accelerator 1 (TBBS) | | 1.9 | 1.9 | 1.9 | 1.7 | 1.7 | 1.7 | 1.7 | 1.7 | 1.7 | 1.7 |
| Vulcanization accelerator 3 (DPG) | | 2.2 | 2.2 | 2.2 | 2.0 | 2.0 | 2.0 | 2.0 | 2.0 | 2.0 | 2.0 |
| Temperature at the time of discharge in X/Y kneading step (°C) | | 155 | 155 | 155 | 155 | 155 | 155 | 155 | 155 | 155 | 155 |
| Mold temperature at the vulcanization step(°C) | | 183 | 183 | 183 | 183 | 183 | 183 | 183 | 183 | 183 | 183 |
| Evaluation result | | | | | | | | | | | |
| Unreacted silane coupling agent | | 0.21 | 0.99 | 2.38 | 0.21 | 0.19 | 0.17 | 0.28 | 0.39 | 0.64 | 2.51 |
| Contamination of tread surface | | 190 | 142 | 102 | 170 | 160 | 185 | 140 | 185 | 205 | 75 |
| Abrasion resistance | | 91 | 96 | 86 | 100 | 103 | 95 | 97 | 95 | 88 | 94 |
| Wet grip performance | | 98 | 100 | 97 | 100 | 102 | 94 | 97 | 97 | 92 | 97 |

not according to the invention

**TABLE 4**

| | | EXAMPLE | | | | | | | | | |
|---|---|---|---|---|---|---|---|---|---|---|---|
| | | 23 | 24 | 25 | 26* | 27 | 28 | 29 | 30 | 31 | 32 |
| Compounding amount (part by mass) | | | | | | | | | | | |
| High-cis BR | | 30 | 30 | 30 | 30 | 30 | 30 | 30 | 30 | 30 | 30 |
| Modified S-SBR | | 70 | 70 | 70 | 70 | 70 | 70 | 70 | 70 | 70 | 70 |
| Carbon black | | 15 | 15 | 15 | 15 | 15 | 15 | 15 | 15 | 15 | 15 |
| Silica 4 (BET: 175) | | 80 | 80 | 80 | 70 | 80 | 80 | 80 | 80 | 80 | 80 |
| Silane coupling agent 4 | | 6.4 | 6.4 | 6.4 | 5.6 | 6.4 | 6.4 | 6.4 | 6.4 | 6.4 | 6.4 |
| Resin 1 (SA85) | | 2 | 4 | 20 | 40 | - | - | - | - | - | - |
| Resin 4 (TR7125) | | - | - | - | - | 10 | - | - | - | - | - |
| Resin 5 (PX1150) | | - | - | - | - | - | 10 | - | - | - | - |
| Resin 6 (PX800) | | - | - | - | - | - | - | 10 | - | - | - |
| Resin 7 (TP160) | | - | - | - | - | - | - | - | 10 | - | - |
| Resin 8 (TP115) | | - | - | - | - | - | - | - | - | 10 | - |
| Resin 9 (TO-125) | | - | - | - | - | - | - | - | - | - | 10 |
| Oil | | 24 | 23 | 15 | 4 | 20 | 20 | 20 | 20 | 20 | 20 |
| Wax | | 1.5 | 1.5 | 1.5 | 1.5 | 1.5 | 1.5 | 1.5 | 1.5 | 1.5 | 1.5 |
| Anti-aging agent 1 (6PPD) | | 3.0 | 3.0 | 3.0 | 3.0 | 3.0 | 3.0 | 3.0 | 3.0 | 3.0 | 3.0 |
| Anti-aging agent 2 (TMQ) | | 0.8 | 0.8 | 0.8 | 0.8 | 0.8 | 0.8 | 0.8 | 0.8 | 0.8 | 0.8 |
| Zinc oxide | | 2.0 | 2.0 | 2.0 | 2.0 | 2.0 | 2.0 | 2.0 | 2.0 | 2.0 | 2.0 |
| I | Mold release agent 1 (WB16) | - | - | - | - | - | - | - | - | - | - |
| II | Mold release agent 2 (Aflux37) | - | - | - | - | - | - | - | - | - | - |
| III | Mold release agent 3 (Aflux16) | 1.5 | 1.5 | 2.5 | 2.5 | 1.5 | 1.5 | 1.5 | 1.5 | 1.5 | 1.5 |
| IV | Zinc stearate | - | - | - | - | - | - | - | - | - | - |
| V | Stearic acid | 2.0 | 2.0 | 2.0 | 2.0 | 2.0 | 2.0 | 2.0 | 2.0 | 2.0 | 2.0 |
| Total amount of I to V | | 3.5 | 3.5 | 4.5 | 4.5 | 3.5 | 3.5 | 3.5 | 3.5 | 3.5 | 3.5 |
| Compounding amount (part by mass) | | | | | | | | | | | |
| Sulfur (containing 5% oil) | | 1.5 | 1.5 | 1.5 | 1.5 | 1.5 | 1.5 | 1.5 | 1.5 | 1.5 | 1.5 |
| Vulcanization accelerator 1 (TBBS) | | 1.7 | 1.7 | 1.7 | 1.7 | 1.7 | 1.7 | 1.7 | 1.7 | 1.7 | 1.7 |
| Vulcanization accelerator 3 (DPG) | | 2.0 | 2.0 | 2.0 | 2.0 | 2.0 | 2.0 | 2.0 | 2.0 | 2.0 | 2.0 |
| Temperature at the time of discharge in X/Y kneading step (°C) | | 155 | 155 | 155 | 155 | 155 | 155 | 155 | 155 | 155 | 155 |
| Mold temperature at the vulcanization step(°C) | | 183 | 183 | 183 | 183 | 183 | 183 | 183 | 183 | 183 | 183 |
| Evaluation result | | | | | | | | | | | |
| Unreacted silane coupling agent | | 0.19 | 0.20 | 0.21 | 0.24 | 0.16 | 0.17 | 0.24 | 0.17 | 0.16 | 0.18 |
| Contamination of tread surface | | 210 | 185 | 155 | 145 | 165 | 175 | 185 | 155 | 170 | 165 |
| Abrasion resistance | | 101 | 100 | 100 | 94 | 102 | 98 | 95 | 98 | 102 | 102 |
| Wet grip performance | | 91 | 95 | 110 | 106 | 102 | 98 | 93 | 102 | 104 | 104 |

not according to the invention

**TABLE 5**

| | | EXAMPLE | | | | | | | | | |
|---|---|---|---|---|---|---|---|---|---|---|---|
| | | 33 | 34 | 35 | 36 | 37 | 38 | 39 | 41 | 42 | 43 |
| Compounding amount (part by mass) | | | | | | | | | | | |
| NR | | - | - | - | - | - | - | 15 | - | - | - |
| High-cis BR | | 30 | 30 | 30 | 30 | 30 | 30 | 15 | 30 | 30 | 30 |
| Modified S-SBR | | 70 | 70 | 70 | 70 | 70 | 70 | 70 | 70 | 70 | 70 |
| Carbon black | | 15 | 60 | 60 | 15 | 15 | 15 | 15 | 15 | 15 | 15 |
| Silica 4 (BET: 175) | | 80 | 80 | 80 | 80 | 80 | 80 | 80 | 80 | 80 | 80 |
| Silane coupling agent 4 | | 6.4 | 6.4 | 6.4 | 6.4 | 6.4 | 6.4 | 6.4 | 6.4 | 6.4 | 6.4 |
| Resin 1 (SA85) | | 10 | 10 | 10 | 10 | 10 | 10 | 10 | 10 | 10 | 10 |
| Oil | | 20 | 20 | 20 | 20 | 20 | 20 | 20 | 20 | 20 | 20 |
| Wax | | 1.5 | 1.5 | 1.5 | 1.5 | 1.5 | 1.5 | 1.5 | 1.5 | 1.5 | 1.5 |
| Anti-aging agent 1 (6PPD) | | 3.0 | 3.0 | 3.0 | 3.0 | 3.0 | 3.0 | 3.0 | 3.0 | 3.0 | 3.0 |
| Anti-aging agent 2 (TMQ) | | - | 2.5 | - | 0.8 | 0.8 | 0.8 | 0.8 | 0.8 | 0.8 | 0.8 |
| Anti-aging agent 3 (NS-5) | | - | - | 2 | - | - | - | - | - | - | - |
| Zinc oxide | | 2.0 | 2.0 | 2.0 | 0.5 | 1.5 | 4.0 | 2.0 | 2.0 | 2.0 | 2.0 |
| I | Mold release agent 1 (WB16) | - | - | - | - | - | - | - | - | - | - |
| II | Mold release agent 2 (Aflux37) | - | - | - | - | - | - | - | - | - | - |
| III | Mold release agent 3 (Aflux16) | 1.5 | 1.5 | 1.5 | 1.5 | 1.5 | 1.5 | 1.5 | 1.5 | 1.5 | 1.5 |
| IV | Zinc stearate | - | - | - | - | - | - | - | - | - | - |
| V | Stearic acid | 2.0 | 2.0 | 2.0 | 2.0 | 2.0 | 2.0 | 2.0 | 2.0 | 2.0 | 2.0 |
| Total amount of I to V | | 3.5 | 3.5 | 3.5 | 3.5 | 3.5 | 3.5 | 3.5 | 3.5 | 3.5 | 3.5 |
| Sulfur (containing 5% oil) | | 1.5 | 1.5 | 1.5 | 1.7 | 1.5 | 1.5 | 1.5 | 1.5 | 1.5 | 1.5 |
| Vulcanization accelerator 1 (TBBS) | | 1.7 | 1.7 | 1.7 | 1.3 | 1.7 | 1.7 | 1.7 | - | 1.7 | 1.7 |
| Vulcanization accelerator 2 (CBS) | | - | - | - | - | - | - | - | 1.7 | - | - |
| Vulcanization accelerator 3 (DPG) | | 2.0 | 2.0 | 2.0 | 2.0 | 2.0 | 2.0 | 2.0 | 2.0 | 0.8 | 2.0 |
| Vulcanization accelerator 4 (TBZTD) | | - | - | - | - | - | - | - | - | 0.3 | - |
| Temperature at the time of discharge in X/Y kneading step (°C) | | 155 | 155 | 155 | 155 | 155 | 155 | 155 | 155 | 155 | 155 |
| Mold temperature at the vulcanization step(°C) | | 183 | 183 | 183 | 183 | 183 | 183 | 183 | 183 | 183 | 170 |
| Evaluation result | | | | | | | | | | | |
| Unreacted silane coupling agent | | 0.18 | 0.22 | 0.22 | 0.05 | 0.14 | 0.42 | 0.24 | 0.20 | 0.14 | 0.20 |
| Contamination of tread surface | | 195 | 150 | 190 | 185 | 180 | 155 | 160 | 155 | 180 | 185 |
| Abrasion resistance | | 102 | 99 | 101 | 104 | 105 | 91 | 94 | 98 | 99 | 105 |
| Wet grip performance | | 101 | 99 | 101 | 98 | 101 | 94 | 106 | 100 | 101 | 101 |

As shown in Tables 1 to 5, it can be found that in Examples where a rubber composition comprising a predetermined amount of at least one selected from the group consisting of stearic acid, a metal salt of saturated fatty acid and a specific mold release agent, a specific resin, silica and a silane coupling agent based on a diene rubber component and in which the amount of an unreacted silane coupling agent in the rubber composition before vulcanization is within a predetermined range is used, a rubber composition in which mold contamination is prevented while maintaining abrasion resistance and wet grip performance can be produced.

## Claims

1. A rubber composition comprising:
2.5 to 8.0 parts by mass of at least one selected from the group consisting of: stearic acid, a metal salt of saturated fatty acid and a mold release agent comprising at least one selected from the group consisting of a metal salt of fatty acid, a fatty acid amide and an amide ester provided that the rubber composition includes 0.1 to 4.0 parts by mass of the mold release agent;
1 to 50 parts by mass of a resin which has a softening point of 82 to 160°C; and
30 to 140 parts by mass of silica which has a BET specific surface area of 80 to 270 m²/g, based on 100 parts by mass of a diene rubber component,
the rubber composition further comprising 3 to 10 parts by mass of a silane coupling agent based on 100 parts by mass of the silica,
wherein the amount of an unreacted silane coupling agent in the rubber composition before vulcanization is 0 to 1.0 part by mass based on 100 parts by mass of the diene rubber component,
wherein the rubber composition further comprises not more than 2.5 parts by mass of zinc oxide based on 100 parts by mass of the diene rubber component, and
wherein the rubber composition further comprises 15 to 50 parts by mass of oil based on 100 parts by mass of the diene rubber component.

2. The rubber composition of claim 1, wherein the amount of the unreacted silane coupling agent in the rubber composition before vulcanization is 0 to 0.2 part by mass based on 100 parts by mass of the diene rubber component.

3. The rubber composition of claim 1 or 2, wherein the rubber composition further comprises 0.1 to 2.4 parts by mass of a quinoline anti-aging agent based on 100 parts by mass of the diene rubber component.

4. The rubber composition of any one of claims 1 to 3, wherein the silane coupling agent is a mercapto silane coupling agent.

5. A tire which has a tread composed of the rubber composition of any one of claims 1 to 4.

## Patentansprüche

1. Kautschukzusammensetzüng, umfassend:
2,5 bis 8,0 Masseteile von zumindest einem, das aus der Gruppe ausgewählt ist, die aus: Stearinsäure, einem Metallsalz einer ungesättigten Fettsäure und einem Formtrennmittel besteht, das zumindest eines umfasst, das aus der Gruppe ausgewählt ist, die aus einem Metallsalz einer Fettsäure, einem Fettsäureamid und einem Amidester besteht, vorausgesetzt, dass die Kautschukzusammensetzung 0,1 bis 4,0 Masseteile des Formtrennmittels umfasst;
1 bis 50 Masseteile eines Harzes, das einen Erweichungspunkt von 82 bis 160°C aufweist; und
30 bis 140 Masseteile Silica, das eine spezifische BET-Oberfläche von 80 bis 270 m²/g aufweist, bezogen auf 100 Masseteile einer Dienkautschukkomponente,
wobei die Kautschukzusammensetzung ferner 3 bis 10 Masseteile eines Silankopplungsmittels bezogen auf 100 Masseteile des Silicas umfasst,
wobei die Menge eines nicht reagierten Silankopplungsmittels in der Kautschukzusammensetzung vor der Vulkanisation 0 bis 1,0 Masseteile bezogen auf 100 Masseteile der Dienkautschukkomponente beträgt,
wobei die Kautschukzusammensetzung ferner nicht mehr als 2,5 Masseteile Zinkoxid bezogen auf 100 Masseteile der Dienkautschukkomponente umfasst, und
wobei die Kautschukzusammensetzung ferner 15 bis 50 Masseteile Öl bezogen auf 100 Masseteile der Dienkautschukkomponente umfasst.

2. Kautschukzusammensetzung nach Anspruch 1, wobei die Menge des nicht reagierten Silankopplungsmittels in der Kautschukzusammensetzung vor der Vulkanisation 0 bis 0,2 Masseteile bezogen auf 100 Masseteile der Dienkautschukkomponente beträgt.

3. Kautschukzusammensetzung nach Anspruch 1 oder 2, wobei die Kautschukzusammensetzung ferner 0,1 bis 2,4 Masseteile eines Chinolinalterungsschutzmittels bezogen auf 100 Masseteile der Dienkautschukkomponente umfasst.

4. Kautschukzusammensetzung nach einem der Ansprüche 1 bis 3, wobei das Silankopplungsmittel ein Mercaptosilankopplungsmittel ist.

5. Reifen, der eine Lauffläche aufweist, die aus der Kautschukzusammensetzung nach einem der Ansprüche 1 bis 4 zusammengesetzt ist.

## Revendications

1. Composition de caoutchouc comprenant :
2,5 à 8,0 parties en masse d'au moins un composant sélectionné parmi le groupe comprenant : acide stéarique, sel métallique d'acide gras saturé et un agent de démoulage comprenant au moins un composant sélectionné parmi le groupe comprenant un sel métallique d'acide gras, un amide d'acide gras et un ester amide à condition que la composition de caoutchouc inclue 0,1 à 4,0 parties en masse de l'agent de démoulage ;
1 à 50 parties en masse d'une résine qui a un point de ramollissement de 82 à 160° C ; et
30 à 140 parties en masse de silice qui présente une superficie spécifique BET de 80 à 270 m²/g, sur la base de 100 parties en masse d'un composant caoutchouc diène,
la composition de caoutchouc comprenant en outre 3 à 10 parties en masse d'un agent de couplage au silane sur la base de 100 parties en masse de silice,
dans laquelle la quantité d'agent de couplage au silane non réagi dans la composition de caoutchouc avant vulcanisation est de 0 à 1,0 partie en masse sur la base de 100 parties en masse du composant caoutchouc diène,
dans laquelle la composition de caoutchouc ne comprend en outre pas plus de 2,5 parties en masse d'oxyde de zinc sur la base de 100 parties en masse du composant caoutchouc diène, et
dans laquelle la composition de caoutchouc comprend en outre 15 à 50 parties en masse d'huile sur la base de 100 parties en masse du composant caoutchouc diène.

2. Composition de caoutchouc selon la revendication 1, dans laquelle la quantité de l'agent de couplage au silane non réagi dans la composition de caoutchouc avant vulcanisation est de 0 à 0,2 parties en masse sur la base de 100 parties en masse du composant de caoutchouc diène.

3. Composition de caoutchouc selon la revendication 1 ou 2, dans lequel la composition de caoutchouc comprend en outre 0,1 à 2,4 parties en masse d'un agent anti-vieillissement à la quinoline sur la base de 100 parties en masse du composant caoutchouc diène.

4. Composition de caoutchouc selon l'une quelconque des revendications 1 à 3, dans lequel l'agent de couplage au silane est un agent de couplage au mercapto silane.

5. Pneumatique qui comporte une bande de roulement composée de la composition de caoutchouc selon l'une quelconque des revendications 1 à 4.
